(19)

Europäisches
Patentamt
European
Patent Office
Office européen
des brevets

(11) **EP 4 273 284 A1**

(12) **EUROPEAN PATENT APPLICATION**

(43) Date of publication:
**08.11.2023 Bulletin 2023/45**

(21) Application number: **22305660.7**

(22) Date of filing: **03.05.2022**

(51) International Patent Classification (IPC):
**C22B 59/00** (2006.01)

(52) Cooperative Patent Classification (CPC):
**C22B 59/00**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Centre national de la recherche scientifique
75016 Paris (FR)**
• **Université de Strasbourg
67000 Strasbourg (FR)**

• **The Provost, Fellows, Foundation Scholars,and
the
Other members of Board, of The College of The
Holy
& Undiv. Trinity of Queen Elizabeth near Dublin
Dublin 2  D02 CX56 (IE)**

(72) Inventors:
• **DUNNE, Peter
67000 STRASBOURG (FR)**
• **COEY, Michael
DUBLIN, D15FF2Y (IE)**
• **DOUDIN, Bernard
67000 STRASBOURG (FR)**

(74) Representative: **Lavoix
2, place d'Estienne d'Orves
75441 Paris Cedex 09 (FR)**

(54)   **METHOD FOR SEPARATING A RARE EARTH ELEMENT IN SOLUTION**

(57)    The invention concerns a method for separating at least one rare earth element from a solution containing said at least one rare earth element and optionally at least one further magnetic element, the method comprising the following steps a) applying to the solution a non-uniform magnetic field, whereby creating within the solution at least one first zone and at least one second zone having a different magnetic field value, the application of the non-uniform magnetic field value inducing concentrating said at least one rare earth element in the first zone and concentrating said optional at least one further magnetic element in the second zone, b) increasing the pH of the solution in the first zone, to precipitate said at least one rare earth element, or in the second zone to precipitate said optional at least one further magnetic element, and c) recovering the precipitate.

**EP 4 273 284 A1**

**Description**

The invention relates to a method for separating at least one rare earth element from a solution comprising said at least one rare earth element, optionally as a mixture with other magnetic elements, notably with other rare earth elements.

Rare earth elements (REE), also called rare earth metals are a set of 17 nearly indistinguishable lustrous silvery-white soft heavy metals. They are constituted of the fifteen lanthanides (lanthanum La, cerium Ce, praseodymium Pr, neodymium Nd, promethium Pm, samarium Sm, europium Eu, gadolinium Gd, terbium Tb, dysprosium Dy, holmium Ho, erbium Er, thulium Tm, ytterbium Yb and lutetium Lu) to which scandium Sc and yttrium Y are added.

Rare earths elements are broadly used in various applications.

As part of metal alloys, they are for example present in nickel metal hydride batteries, fuel cells, steel compositions, super alloys or even in Aluminum-Magnesium alloys. They also are useful as catalysts (notably in petroleum refining), in catalytic converters, as fuel additives, in various chemical processing and even for air pollution control. Rare earths elements are also widely used for their magnetic properties, notably in computer hard drives, motors, turbines, microphones, or speakers and in magnetic resonance imaging (MRI) instruments.

Contrary to what their name suggests rare earth elements are quite widespread in the earth's crust. However, their supply is problematic. Indeed, suppliers of rare earth elements are limited. Further, most of the suppliers are located in the same geographic regions, mostly in China, making thus rare earth elements are strategic resources.

For these reasons, rare earth elements have been listed by the European Union as associated to a high supply risk.

There is thus a need to find alternatives supply routes.

An important source that is not sufficiently exploited today is wastes. Indeed, mining and industrial wastes comprises significant quantities of rare earth elements that are not valued. The recycling of goods, notably of magnets and/or electronic equipment, is also a very promising alternative supply solution.

One of the biggest challenges associated with the recovery of rare earth elements from waste is the difficulty to separate a specific earth element from other metals, and notably from others rare earth elements. Indeed, rare earths elements have similar chemical and physical properties, thus making them difficult to be separated individually.

Several methods of separation are currently known.

Solvent extraction is one of the most widely used methods. Based on the differences of solubility of the rare earth elements in two different immiscible liquids, its permits to separate the different rare earth elements. However, it is relatively long to implement. Further, it requires heating and the use of toxic solvents. The implementation of this method thus requires very restrictive security measures to guarantee the safety of the operators and to prevent environment pollutions.

Another method is ion exchange chromatography. Based on the differences of electrostatic properties of the rare earth elements, this method is quite effective. However, it is slow and very expensive. For these reasons, ion exchange chromatography is reserved for applications requiring a very high purity, typically greater than 99.9%, and with a high benefit.

A third method is molten salt electrolysis. The main drawback of this method is that it requires very high temperature (around 400-900°C), making it very expensive.

A fourth method is described in WO2021155224 wherein rare earth elements are precipitated as carbonates, hydroxycarbonates, bicarbonates, phosphate salts, dihydrogen phosphate salts, hydrogen phosphate salts, or any combinations thereof. However, this document does not describe a step of magnetic separation of the rare earth elements. Further, it does not describe a step of local increase of the pH of the solution.

Therefore, there is a need to provide alternatives method for recovering rare earth elements from the secondary sources, notably from wastes.

In particular, there is a need for a method allowing recycling rare earth elements present in mining, industrial and/or electronic wastes.

There is a need for a method of separation of rare earth elements that is easy to implement and whose associated costs are significantly reduced.

There is also a need for a method for recovering rare earth elements, which are environmentally friendly, notably which do not need the use of toxic solvents.

There is also a need for a method for recovering rare earth elements whose risks for the operators are minimized.

There is also a need for a method allowing isolating a specific rare earth element from a mixture of several rare earth elements.

**Summary of the invention**

The invention relates to a method for separating at least one rare earth element from a solution containing said at least one rare earth element and optionally at least one further magnetic element, the method comprising the following steps:

a) applying to the solution a non-uniform magnetic field, whereby creating within the solution at least one first zone and at least one second zone having a different magnetic field value, the application of the non-uniform magnetic field value inducing concentrating said at least one rare earth element in the first zone and concentrating said optional at least one further magnetic element in the second zone,
b) increasing the pH of the solution in the first zone, whereby inducing the precipitation of said at least one rare earth element, or increasing the pH of the solution in the second zone, whereby inducing the precipitation of said optional at least one further magnetic element, and
c) recovering the precipitate.

Preferably, said at least one further magnetic element is chosen from the group consisting of: transition metals, rare earth elements different from said at least one rare earth element and mixtures thereof.

According to a particular embodiment, said at least one rare earth element has a magnetic susceptibility $\chi_{REE}$ and said further magnetic element has a magnetic susceptibility $\chi_{ME}$ such that the absolute relative difference $|(\chi_{REE} - \chi_{ME}) / \chi_{ME}|$ is greater than or equal to 1, preferably greater than or equal to 10.

According to a first embodiment, $\chi_{REE}$ is greater than $\chi_{ME}$ and the first zone is the zone of the solution with the highest magnetic field value.

According to a second embodiment, $\chi_{ME}$ is greater than $\chi_{REE}$ and the first zone is the zone of the solution with the lowest magnetic field value.

Preferably, during step b), the pH is locally increased to a value greater than 7, preferably greater than 8.

According to a first embodiment, during step b), the pH is locally increased by electrochemically reducing at least one chemical substance, for example nitrate ions $NO_3^-$, present in the solution. Preferably, according to a first embodiment said at least one chemical substance is electrochemically reduced at the surface of an electrode located of the solution.

Preferably, the electrode is a mesh electrode, preferably a ferromagnetic mesh electrode.

According to a second embodiment, during step b), the pH is increased by a local addition of a chemical base.

According to an embodiment, the method further comprises, before step c), an intermediary step of removing the non-uniform magnetic field.

Preferably, the precipitate is recovered in step c) by flowing a purge solution, said purge solution preferably consisting of an aqueous solution, optionally acidified.

According to an embodiment, the method comprises, before step a), a preliminary step of dissolution of a solid comprising said at least one rare earth element and optionally at least one further magnetic element with a solvent, preferably with an acidic solution.

Preferably, if cobalt Co, iron Fe and/or nickel Ni are present in the solution, they are removed before the application of the non-uniform magnetic field.

According to an embodiment, the method further comprises a step of purification and/or metal conversion of the precipitate.

## Detailed description of the invention

The invention relates to a method for separating at least one rare earth element from a solution containing said at least one rare earth element and optionally at least one further magnetic element, the method comprising the following steps:

a) applying to the solution a non-uniform magnetic field, whereby creating within the solution at least one first zone and at least one second zone having a different magnetic field value, the application of the non-uniform magnetic field value inducing concentrating said at least one rare earth element in the first zone and concentrating said optional at least one further magnetic element in the second zone,
b) increasing the pH of the solution in the first zone, whereby inducing the precipitation of said at least one rare earth element, or increasing the pH of the solution in the second zone, whereby inducing the precipitation of said optional at least one further magnetic element, and
c) recovering the precipitate.

The aim of the process according to the invention is to isolate and/or recover and/or separate at least one specific rare earth element present in a solution from other elements also present in the solution.

In particular, the aim of the process according to the invention is to isolate and/or recover and/or separate said at least one specific rare earth element from other elements that could be present in the solution, notably from other magnetic elements such as other rare earth elements.

By *"separating at least one rare earth element from a solution"*, we refer in the context of the invention to isolate said at least one rare earth element from at least one constituent of the solution. The constituent from which the rare earth element is to be separated may consist of other elements, notably others magnetic elements, but also of the solvent itself.

According a first embodiment, the rare earth element is recovered as a precipitate.

Preferably, according to this first embodiment, the method comprises the following steps:

a) applying to the solution a non-uniform magnetic field, whereby creating within the solution at least one first zone and at least one second zone having a different magnetic field value, the application of the non-uniform magnetic field value inducing concentrating said at least one rare earth element in the first zone,
b) increasing the pH of the solution in the first zone, whereby inducing the precipitation of said at least one rare earth element, and
c) recovering the precipitate of said at least one rare earth element of step b).

According a second embodiment, the further magnetic elements are selectively precipitated, while maintaining said at least one rare earth element in solution.

Preferably, according to this second embodiment, the method comprises the following steps:

a) applying to the solution a non-uniform magnetic field, whereby creating within the solution at least one first zone and at least one second zone having a different magnetic field value, the application of the non-uniform magnetic field value inducing concentrating said at least one rare earth element in the first zone and concentrating said at least one further magnetic element in the second zone,
b) increasing the pH of the solution in the second zone, whereby inducing the precipitation of said optional at least one further magnetic element, and
c) recovering the precipitate of said at least one further magnetic element.

*The solution*

By *"solution"*, we refer in the context of the invention to a composition, which is liquid at ambient conditions, notably at a temperature of 25°C and at an ambient pressure of 1 bar.

The solution typically consists of a liquid solvent, notably an aqueous solvent, wherein said at least one rare earth element to be separated is dissolved.

Preferably, the at least one rare earth element to be separated from the solution is chosen from the group consisting of: lanthanum La, cerium Ce, praseodymium Pr, neodymium Nd, promethium Pm, samarium Sm, europium Eu, gadolinium Gd, terbium Tb, dysprosium Dy, holmium Ho, erbium Er, thulium Tm, ytterbium Yb, lutetium Lu, scandium Sc, yttrium Y and mixtures thereof.

According to a particular embodiment, the at least one rare earth element to be separated from the solution is chosen from the group consisting of: Gadolinium Gd, Terbium Tb, Dysprosium Dy, Holmium Ho, Erbium Er, Thulium Tm, and mixtures thereof. More preferably, it is chosen from the group consisting of: Terbium Tb, Dysprosium Dy, Holmium Ho, Erbium Er and mixtures thereof.

According to an alternative embodiment, the at least one rare earth element to be separated from the solution is chosen from the group consisting of: neodymium Nd, Dysprosium Dy, and mixtures thereof. Advantageously, the at least one rare earth element to be separated from the solution is neodymium Nd.

Preferably, the solution comprises from $1.10^{-3}$ mol.L$^{-1}$ to 2 mol.L$^{-1}$ of said at least one rare earth element to be separated, more preferably from 0.1 mol.L$^{-1}$ to 1.0 mol.L$^{-1}$, typically from 0.05 mol.L$^{-1}$ to 0.5 mol.L$^{-1}$.

Preferably, the solvent is an aqueous solvent, notably an acidic aqueous solution.

More preferably, the solvent is chosen from the group consisting of: nitric acid solutions, chloride acid solutions, sulfuric acid solutions, and mixtures thereof. Advantageously, the solvent consists of a nitric acid solution.

Preferably, the acidic aqueous solution has a concentration in acid ranging from 0.1 mol.L$^{-1}$ to 5 mol.L$^{-1}$, more preferably from 0.5 mol.L$^{-1}$ to 2 mol.L$^{-1}$.

Preferably, the pH of the starting solution is less than or equal to 5.0, more preferably less than or equal to 4.9, typically from 2.0 to 4.0.

Therefore, when the solvent is chosen from aqueous acidic solution, the at least one rare earth element(s) to be separated is(are) present in the starting solution in the ionic form, typically as cation(s).

The solution to be treated may further comprise additional elements and/or compounds, which are different from the rare earth element(s) to be separated. These additional elements and/or compounds correspond, in the context of the invention, to impurities that are to be separated from the rare earth element(s) of interest. In particular, the aim of the invention is to recover and/or isolate the rare earth element(s) of interest without the additional element(s) or compound(s).

These additional element(s) or compound(s) may for example be kept in the solution while the rare earth element(s) of interest are precipitated. Alternatively, these additional element(s) or compound(s) may be precipitated, while maintaining the rare earth element(s) of interest in solution. The method thus permits directly and without any additional step to separate rare earth element(s) of interest from the additional element(s) or compound(s).

However, some additional element(s) or compound(s) may not be isolated from the rare earth element(s) of interest by simply implementing steps a), b) and c) of the process of the invention. These specific impurities thus have to be separated/eliminated during a pretreatment step.

The need of one or several pretreatment step(s) depends on the specific nature of the impurities to be extracted and notably on their behavior in the magnetic field applied in step b.

Advantageously, the process of the invention comprises, before step a), a preliminary step of elemental analysis to identify the additional elements optionally present in the solution. This preliminary step permits to the skilled person to determine the nature of the elements present in the solution and to identify the eventual pretreatment steps needed.

According to a particular embodiment, the solution further comprises at least one further magnetic element chosen from the group consisting of: transition metals, rare earth elements different from said at least one rare earth element(s) to be separated and mixtures thereof.

By *"magnetic element",* we refer in the context of the invention to a paramagnetic or diamagnetic element. It consists for example of a rare earth element or of a transition metal such as cobalt Co, nickel Ni, iron Fe and any of their solubilized ionic form.

By *"further magnetic element",* we refer in the context of the invention to a paramagnetic or diamagnetic element, which is different from the rare earth element(s) of interest. The further magnetic element may for example consists of a rare earth element different from the rare earth element(s) of interest or of a transition metal such as cobalt Co, nickel Ni, iron Fe and any of their solubilized ionic form.

Depending on the difference of magnetic susceptibility between the rare earth element(s) of interest and the further magnetic element(s), the process of the invention may allow separating the rare earth element(s) of interest from said further magnetic element(s).

Otherwise, preliminary step(s) of purification are needed to separate and/or eliminate the further magnetic element(s), before implementing the process of the invention.

According to a first variant, said at least one rare earth element of interest has a magnetic susceptibility $\chi_{REE}$ and said further magnetic element has a magnetic susceptibility $\chi_{ME}$ such that the absolute relative difference $|(\chi_{REE} - \chi_{ME})/\chi_{ME}|$ is greater than or equal to 1, preferably greater than or equal to 10.

According to this variant, the process of the invention allows separating the rare earth element(s) of interest simply by implementing steps a) and b) defined above. Indeed, the implementation of the process of the invention allows isolating the rare earth element(s) of interest from the further magnetic element(s).

Preferably, according to this variant, no pretreatment step is required to eliminate the further magnetic element(s), notably the further rare earth element(s).

Otherwise, in the case where the magnetic susceptibility $\chi_{REE}$ of the rare earth element(s) of interest and the magnetic susceptibility $\chi_{ME}$ of the further magnetic element(s) are too close, the implementation of steps a) and b) of the process of the invention does not permit their separation. Preliminary step(s) of purification are needed to separate and/or eliminate the further magnetic element(s), before implementing the process of the invention.

Mention may be made of cobalt Co, Nickel Ni, iron Fe and boron B that are regularly present in mining wastes.

Cobalt Co, Nickel Ni, iron Fe and boron B may for example be separated by selective precipitation in presence of oxalic acid to the solution. Indeed, the addition of magnesium oxide MgO to the solution permits to selectively precipitate cobalt Co, Nickel Ni, iron Fe and/or boron B, while maintaining the rare earth elements in solution. A solution free from cobalt Co, Nickel Ni, iron Fe and/or boron B may then be recovered by filtering. A suitable method of selective precipitation is for example described in EP3180290.

Cobalt Co, Nickel Ni and Iron Fe being magnetic elements, and depending on the difference between their magnetic susceptibility and those of the rare earth element of interest, they may be eliminated by simply implementing steps a), b) and c) of the process of the invention. However, their selective precipitation using magnesium oxide is easier.

By *"free from element A",* we refer in the context of the invention to a solution comprising a very low concentration of element A. In particular, the concentration of element A in the solution is less than or equal to 0.001 mol.L$^{-1}$, preferably less than or equal to 0.0001 mol.L$^{-1}$.

The starting solution typically results from the dissolution of a solid comprising said at least one rare earth element to be separated.

According to a particular embodiment, the process of the invention comprises a preliminary step of preparation of the solution by dissolving such a solid, preferably in an acidic solution.

The solid comprising the rare earth element(s) of interest typically consists of mining wastes, industrial wastes and/or goods or equipment to be recycled.

By *"mining waste"*, we refer in the context of the invention to solid and liquid residue from coal mining; phosphogypsum tailings; uranium mine waste; and acid mine drainage from rare earth mining and polymetallic sources like Zn-Pb or pyrite-Cu mining.

By *"industrial wastes"*, we refer in the context of the invention to coal fly ash, the residual particulate matter from coal combustion; bauxite residue from bauxite processing for aluminum production; and electronic waste (e-waste) from consumer electronics and electric vehicles.

As examples of goods or equipment to be recycled, mention may for example be made of electronic equipment, magnets, refined ores, rechargeable batteries such as Li-ion and nickel-metal hydride (Ni-MH) batteries, and catalytic converters, which are a source of cerium oxide.

In the context of recycling, and before dissolving the solid, the implementation of preliminary steps of sorting, burning and/or elimination of any polymeric materials may be necessary, depending on the starting solid. The determination of these possible preliminary steps and how to implement them belong to the general knowledge of the skilled person.

Preferably, the acidic solution is chosen from the group consisting of: nitric acid solutions, oxalic acid solutions, chloride acid solutions, sulfuric acid solutions, and mixtures thereof. Advantageously, the acidic solution consists of an aqueous solution of nitric acid.

Preferably, the concentration of acid in the acidic solution ranges from $0.1 \text{ mol.L}^{-1}$ to $5 \text{ mol.L}^{-1}$, more preferably from $0.5 \text{ mol.L}^{-1}$ to $2 \text{ mol.L}^{-1}$.

Advantageously, the preliminary step of dissolution of the solid is performed by dipping the solid in a hot acidic solution.

Preferably, the acidic solution is put in contact with the solid at a temperature ranging from 30°C to 100°C, more preferably from 40°C to 80°C, typically from 50°C to 70°C.

Preferably, the dissolution of the solid in the acidic solution is performed under stirring.

Advantageously, stirring and/or heating are maintained until all the starting solid has been dissolved in the solution. Preferably, stirring and/or heating is(are) carried out for at least 1 minute, more preferably for at least 5 minutes, even more preferably from 1 minute to 1 hour, typically from 5 minutes to 30 minutes.

According to a particular embodiment, after the complete dissolution of the solid, a few drops of a base solution are added to the solution to increase its pH. The aim of this optional step is to reduce the required overpotential for local precipitation of the at least one rare earth element to be separated.

Preferably, the base solution is chosen from the group consisting of potassium hydroxide, sodium hydroxide, disodium phosphate, and mixtures thereof.

Preferably, the concentration of the base solution ranges from $0.01 \text{ mol.L}^{-1}$ to $1.0 \text{ mol.L}^{-1}$, for example $0.1 \text{ mol.L}^{-1}$.

Advantageously, the base solution is added to the solution until the pH of the solution ranges a value from 3.0 to 4.9, typically from 4.0 to 4.5.

Elemental analysis of the solution is required to determine the operating conditions, notably the maximum and minimal values of the magnetic field required to isolate the rare earth element(s) of interest but also its topology. This analysis may include X-ray fluorescence (XRF), inductively coupled plasma mass spectrometry (ICP-MS), or inductively coupled plasma optical emission spectrometry (ICP-OES), which can all be applied to liquids. If only optically active elements are known to be present, UV-visible absorbance spectroscopy of said solution can be employed instead, both to identify which elements are in solution from their characteristic absorbance spectra, and also their concentration with calibration curves of absorbance following the Beer-Lambert law.

*The magnetic field*

The process of the invention comprises a first step a) of applying to the solution a non-uniform magnetic field, whereby creating within the solution at least one first zone and at least one second zone having a different magnetic field value.

By *"non-magnetic magnetic field'*, we refer in the context of the invention to a magnetic field exercising in a specific region, and whose intensity varies depending on the position in this specific region. The region typically comprises at least one low field region and at least one high field zone such that the intensity of the magnetic field exercising in said at least one high field zone is higher than the intensity of the magnetic field exercising in said at least one low field zone.

Preferably, the intensity of the magnetic field in said at least one high field zone is more than 5 times the intensity of the magnetic field in said at least one low field zone, more preferably more than 10 times, even more preferably more than 20 times.

Preferably, the intensity of the magnetic field exercising in said at least one high field zone ranges from 200 mT to 1.0 T, more preferably from 500 mT to 0.9 T, typically from 300 mT to 600 mT.

Preferably, the intensity (absolute value) of the magnetic field exercising in said at least one low field zone ranges from 0.1 mT to 100 mT, more preferably from 0.1 mT to 50 mT, typically from 0.1 mT to 50 mT.

A magnetic field **B** imposed on a substance induces a magnetization **M,** according to the constitutive relation **B** = $\mu_0$(**H** + **M**), where $\mu_0$ is the permeability of free space, and **H** is the auxiliary magnetic field. In free space, i.e. vacuum, **B** = $\mu_0$ **H**. In linear magnetic media, the induced magnetization **M** is related to the imposed magnetic field by **H** = $\chi$ **M** where $\chi$ is the dimensionless magnetic susceptibility. $\chi$ is a measure of the magnetizability of a material to a magnetic field. A further useful quantity when dealing with substances of varying concentration c, in a liquid, is the molar magnetic susceptibility, $\chi_m$, defined as $\chi = \chi_m c$. When the imposed magnetic field, **B,** is non-uniform, i.e. there is a magnetic field

gradient $\nabla$**B**, a magnetic field gradient force **F**$_{\nabla B}$ acts on a substance with molar susceptibility $\chi_m$ by

$$\mathbf{F_{\nabla B}} = \frac{1}{\mu_0} \chi_m c \; \mathbf{B} \nabla \mathbf{B}$$

.

Paramagnetic material $(\chi_m > 0)$ are attracted to regions of high magnetic field *(i.e.* regions with the highest absolute value of intensity), while diamagnetic ones $(\chi_m < 0)$ are repulsed and therefor attracted to regions of low magnetic field *i.e.* regions with the lowest absolute value of intensity).

Most rare earth elements can form paramagnetic ions, which means that under the effect of an external magnetic field, they acquire a magnetization oriented in the same direction as the applied magnetic field.

The molar magnetic susceptibility $\chi_m$ of a specific material may be determined according to several methods. For solutions, mention may for example be made of the *Quincke Method* consisting of placing one leg of a U-bend tube containing the target solution in a uniform magnetic field and measuring the change of height of the liquid in the magnetic field or of the *NMR Evans Method* of the chemical shift of a solvent peak due to a paramagnetic species dissolved in it. These two methods are described in detail in P. W. Selwood, Magnetochemistry, 2nd ed. (Interscience Publishers, 1956), and E. M. Schubert, Utilizing the Evans Method with a Superconducting NMR Spectrometer in the Undergraduate Laboratory, J. Chem. Educ. 69, 62 (1992). For solids or liquids, mention may for example be made of a *Gouy balance* where a sample is suspended below a mass balance and its change in effective mass is measured when a magnetic field gradient is imposed; or a magnetometer, such as a *Vibrating Sample Magnetometer,* capable of measuring sample magnetization as a function of applied magnetic field. These methods are described in detail in P. W. Selwood, Magnetochemistry, 2nd ed. (Interscience Publishers, 1956), and J. M. D. Coey, Magnetism and Magnetic Materials (Cambridge University Press, 2010).

The magnetic susceptibility of the main rare earth elements in their most common ionic form are reported in the following table:

| Element | Magnetic susceptibility* $\chi_m$ $10^{-9}$ ($m^3.mol^{-1}$) |
| --- | --- |
| Cerium $Ce^{3+}$ | 32.9 |
| Praseodymium $Pr^{3+}$ | 64.6 |
| Neodymium $Nd^{3+}$ | 60.9 |
| Samarium $Sm^{3+}$ | 15.2 |
| Europium $Eu^{3+}$ | 60.9 |
| Gadolinium $Gd^{3+}$ | 417.6 |
| Terbium $Tb^{3+}$ | 506.3 |
| Dysprosium $Dy^{3+}$ | 592.3 |
| Holmium $Ho^{3+}$ | 570.2 |
| Erbium $Er^{3+}$ | 475.8 |
| Thulium $Tm^{3+}$ | 304.5 |
| Ytterbium $Yb^{3+}$ | 106.8 |
| Yttrium $Y^{3+}$ | -0.15 |
| Lanthanum $La^{3+}$ | -0.25 |
| Scandium $Sc^{3+}$ | -0.05 |

(continued)

| Element | Magnetic susceptibility* $\chi_m$ $10^{-9}$ (m³.mol⁻¹) |
|---|---|
| Lutetium Lu$^{3+}$ | -0.21 |

*references reported from* P. Dunne, Magnetochemistry and Magnetic Separation, in Handbook of Magnetism and Magnetic Materials, edited by J.M.D. Coey and S. Parkin (Springer International Publishing, Cham, 2021), pp. 1-39.

It thus appears that ions of Gadolinium Gd$^{3+}$, Terbium Tb$^{3+}$, Dysprosium Dy$^{3+}$, Holmium Ho$^{3+}$, Erbium Er$^{3+}$ and Thulium Tm$^{3+}$ have a significantly higher magnetic susceptibility $\chi_m$ with respect to ions of the other rare earth elements. Furthermore, the ionic form of four other elements associated with the rare earths, Yttrium Y$^{3+}$, Lanthanum La$^{3+}$, Scandium Sc$^{3+}$, and Lutetium Lu$^{3+}$ are all weakly diamagnetic. Moreover, each of Gadolinium Gd$^{3+}$, Terbium Tb$^{3+}$, Dysprosium Dy$^{3+}$, Holmium Ho$^{3+}$, Erbium Er$^{3+}$ and Thulium Tm$^{3+}$ has a magnetic susceptibility $\chi_m$ that is specific, thus allowing them to be distinguished according to their magnetic properties.

Because of their induced magnetization, paramagnetic ions are attracted towards regions of high magnetic fields. Thus, when placed in a non-uniform magnetic field, the ions with highest susceptibility (most paramagnetic) will move towards the regions with the highest magnitude magnetic fields. Reversely, the ions with lowest susceptibility (diamagnetic or least paramagnetic ions) will remain in regions with lowest magnitude magnetic fields.

Therefore, in the context of the invention, the application to the solution of a non-uniform magnetic field results in a spatial separation of the elements present in the solution according to their magnetic susceptibility $\chi_m$.

In particular, the application of the non-uniform magnetic field leads, within the solution, to the displacement of the magnetic elements, notably of the rare earth elements, according to their magnetic susceptibility $\chi_m$. The rare earth elements are thus spatially sorted according to their magnetic susceptibility $\chi_m$.

The displacement of magnetic elements thus leads to the formation of a gradient of concentration in said at least one rare earth element within the solution. This concentration gradient typically extends from a first zone with a high concentration in said at least one rare earth element towards a second zone with a low concentration in said at least one rare earth element.

Preferably, the concentration in said at least one rare earth element in the first zone is more than 5 times the concentration in said at least one rare earth element in the second zone, more preferably more than 10 times, even more preferably more than 20 times.

The non-uniform magnetic field is typically applied by use of a non-uniform magnetic field generating module.

The non-uniform magnetic field generating module may be placed inside the solution or outside the solution, near the solution.

When placed outside the solution, the non-uniform magnetic field generating module typically consists of a particular assembly of permanent magnets and/or electromagnets.

For example, the non-uniform magnetic field generating module may consist of the association of several axially magnetized rod magnets, placed with parallel or alternating magnetization. Axially magnetized rods arrangements are notably described in P. Dunne, Near Electrode Effects in Magneto-Electrochemistry, Ph.D., Trinity College, University of Dublin, 2011; P. Dunne et al., Magnetic Structuring of Electrodeposits, Phys. Rev. Lett. 107, 024501 (2011), and P. Dunne et al., Patterning Metallic Electrodeposits with Magnet Arrays, Physical Review B 85, 224411 (2012).

Alternatively, the non-uniform magnetic field generating module may consist of the association of diametrically magnetized rod magnets placed with aligned magnetization or an alternating magnetization (for example by alternating neighbors, rows and/or columns). Diametrically magnetized rods arrangements are notably described in O. Cugat et al., Permanent Magnet Variable Flux Sources, IEEE Transactions on Magnetics 30, 4602 (1994).

The non-magnetic magnetic field generating module may also consist of the association of prismatic magnets. 1D linear assemblies are notably disclosed in J. E. Hilton et al., An Adjustable Linear Halbach Array, Journal of Magnetism and Magnetic Materials 324, 2051 (2012). The determination of the alignment of the magnets belongs to the general knowledge of the skilled person, depending on the final magnetic field needed.

When placed inside the solution, the non-uniform magnetic field generating module may consist of a wire, a mesh, or a soft magnetic material that is magnetized by an external magnetic field source.

The intensity of the magnetic field and the specific nature of the magnetic field generating module depend on the rare earth element(s) to be separated and also on the impurities present in the solution, notably the further magnetic elements. Knowing the composition of the solution, the determination of the required magnetic field belongs to the general knowledge of the person skilled in the art.

One example method to determine the magnetic field **B** and field gradient $\nabla$**B** required for a particular solution involves electroplating a mixed oxide onto a flat cathode under the presence of a characterized, spatially varying **B** and $\nabla$**B**. The cathode is in contact with an arrangement of permanent magnets, preferably backed by one or several magnets to provide a well-defined variation of both **B** and $\nabla$**B**. The magnetic field of this magnet arrangement can be simulated and/or measured with a scanning Hall probe, and the resulting field gradient calculated. Preferably, the cathode is a metal foil of thickness < 1 mm, and ideally < 100 $\mu$m. Typically, the cathode consists of a thin metal foil, or metalized Si wafer. Elemental analysis of the deposit such as by scanning X-ray fluorescence (XRF) or energy-dispersive X-ray spectroscopy (EDX) allows the elemental concentration ratio to be mapped and thus correlated to the spatial variation of **B** and $\nabla$**B**.

In the context of the invention, it is necessary to maintain the non-uniform magnetic field until the formation of the precipitate. In particular, the non-uniform magnetic field should be maintained at least during part of step b), preferably until the end of step b).

According to a first embodiment, the non-uniform magnetic field is configured to attract in the first zone of the solution said at least one rare earth element(s) to be separated.

This first embodiment is particularly suitable when the rare earth element(s) to be separated are the most paramagnetic ions present in the solution (i.e. those with the highest magnetic susceptibility $\chi_m$).

More particularly, this first embodiment is particularly suitable when said at least one rare earth element of interest has a magnetic susceptibility $\chi_{REE}$ and the solution further comprises at least one further magnetic element with a magnetic susceptibility $\chi_{ME}$ such *that* $\chi_{RRE} > \chi_{ME}$.

Preferably, according to this first embodiment, the first zone is the zone of the solution with the highest magnetic field value.

According to a second embodiment, the non-uniform magnetic field is configured to attract in the second zone of the solution magnetic the additional rare earth elements which are different from said at least one rare earth metal element. This second embodiment is particularly suitable when the rare earth element to be separated is the least paramagnetic, or most diamagnetic rare earth ion present in the solution (i.e. those with the lowest magnetic susceptibility $\chi_m$).

More particularly, this second embodiment is particularly suitable when said at least one rare earth element of interest has a magnetic susceptibility $\chi_{REE}$ and the solution further comprises at least one further magnetic element with a magnetic susceptibility $\chi_{ME}$ such *that* $\chi_{ME} > \chi_{REE}$.

Preferably, according to this second embodiment, the first zone is the zone of the solution with the lowest magnetic field value.

In the case where the rare earth element(s) to be separated are neither the most nor the least paramagnetic rare earth element(s) present in the solution, it is necessary to repeat one or several times the sequence of steps a), b) and c) defined above so as to successively recover the rare earth elements with a higher magnetic susceptibility $\chi_m$ (or the rare earth elements with a lower magnetic susceptibility $\chi_m$) then the rare earth element(s) of interest.

In particular, the sequence of steps a), b) and c) should be repeated as many times as there are rare earth elements with a higher magnetic susceptibility $\chi_m$ than the rare earth element(s) of interest, or rare earth elements with a lower magnetic susceptibility $\chi_m$ than the rare earth element(s) of interest.

For example, if we consider a starting solution comprising 4 different rare earth elements $RE_1$, $RE_2$, $RE_3$, and $RE_4$, such that $\chi_m(RE_1) > \chi_m(RE_2) > \chi_m(RE_3) > \chi_m(RE_4)$. It is impossible to recover directly $RE_3$ since it is neither the most nor the least paramagnetic rare earth element present in the solution. To recover $RE_3$, it is necessary to apply a first time the sequence of steps a), b) and c) to recover $RE_4$. Then, and when $RE_4$ being recovered from the solution, it is possible to recover $RE_3$ by repeating the sequence of steps a), b) and c).

*pH increasing*

The process of the invention further comprises a step b) of increasing the pH of the solution either in the first zone wherein said at least one rare earth element has been concentrated or in the second zone wherein said optional at least one further magnetic element has been concentrated.

The increase of the pH of the first zone has for direct consequence the precipitation of said at least one rare earth element.

The increase of the pH of the second zone has for direct consequence the precipitation of said at least one further magnetic element.

Preferably, said at least one rare earth element or said at least one further magnetic element is precipitated as an oxide, a hydroxide or mixture thereof, more preferably as an oxide.

By *"(hydr)oxides"*, we refer in the context of the invention to an oxide, a hydroxide or a mixture thereof.

Preferably, during step b), the pH of the solution locally is increased to a value greater than or equal to 3, preferably greater than or equal to 6, typically from 6 to 8.

According to the invention, the increase of pH is a local increase, which means the increase of pH only concerns a specific region of the solution and its vicinity. In particular, during step b), the pH of the rest of the solution remains unchanged. A local increase as performed in the process of the invention is made possible because of the local introduction and/or formation of hydroxide ions OH⁻ only in the first zone or in the second zone. Because of the increase of pH, the rare earth element(s) of interest (in the first zone) or the further magnetic element(s) (in the second zone) immediately react with the hydroxide ions OH⁻ to form the corresponding (hydr)oxides. The immediate reaction of the concentrate elements thus prevents the diffusion of the hydroxide ions in the rest of the solution and a global increase of the pH, at least until the recovery of the precipitate during step c).

The local increase of pH may be performed according to any known process provided that the selected method allows increasing the pH of the solution only in the chosen specific region.

According to a first embodiment, the pH of the solution may for example be locally increased by a local addition, notably by a local injection, of a chemical base.

Preferably, according to this first embodiment, the pH of the solution is locally increased by the chemical dissociation a strong base.

By "strong base", we refer in the context of the invention a chemical base associated to an acid/base couple with a pKa value greater than or equal to 9.

The chemical base may be added to the solution in the form of a concentrated basic solution. In such a case, a local injection may for example be performed by use of micropipettes.

The concentrated basic solution may for example consist of a solution of potassium hydroxide or any other basic compound.

Preferably, the concentrated basic solution has a pH ranging from 7.5 to 14.0, typically from 12.0 to 14.0.

Alternatively, the chemical base may be added to the solution in the form of a solid, for example of a powder.

As examples of solid chemical base, mention may be made to the compounds $LiOH$, $NaOH$, $KOH$, and $Ca(OH)_2$.

According to a second embodiment, the local increase of pH is performed by electrochemical reduction. In particular, the pH of the solution is increased by reduction of a chemical species present in the solution. The chemical species to be reduced may already be present in the solution. Alternatively, specific chemical species may be added to the solution before step a) or step b).

As examples of species that could be electrochemically reduced, mention may be made of nitrate ions, hydroxylamine, oxygen, hydrogen peroxide, and water.

According to a preferred embodiment, the local increase of pH is performed by reducing nitrate ions $NO_3^-$. Preferably, according to this embodiment, the solution was prepared by dissolution of the solid in an aqueous solution of nitric acid. Therefore, nitrate ions are already present in the solution since they have been added during the dissolution step. In particular, no step of addition of a chemical species likely to be electrochemically reduced is needed.

According to a particular embodiment, the chemical species, notably of nitrate ions, is electrochemically reduced at the surface of an electrode located in the solution. In particular, the electrode is placed in the region of the solution wherein the precipitate needs to be formed (in the first region or in the second region).

Preferably, according to this embodiment, the pH of the solution is locally increased by use of an electrochemical cell capable of inducing the reduction of the chemical species likely to be reduced.

Preferably, the electrochemical cell comprises at least one electric current generator connected to at least one cathode, at least one anode and optionally at least one reference electrode.

The aim of the cathode is to reduce the chemical species in solution. The aim of the anode is to close the electrical circuit. The aim of the reference electrode, if present, is to monitor and control the cathode potential with a thermodynamically stable reference reaction.

The cathode is typically chosen from planar, mesh or wire electrodes. The cathode may be segmented or continuous, magnetic or non-magnetic.

According to a particular embodiment, the cathode is a mesh electrode, preferably a ferromagnetic mesh electrode, for example a steel mesh electrode. Therefore, according to this particular embodiment, the oxide of said at least one rare earth element precipitates on the surface of the mesh electrode.

As examples of non-magnetic metals that may be used to form the cathode, mention may be made of platinum Pt, austenitic stainless steel (notably 304 or 316 type), vitreous carbon, graphite and any associations thereof.

As examples of magnetic metals that may be used to form the cathode, mention may be made of martensitic or ferritic steels such as 409 or 410 type stainless steels; metal coated NdFeB permanent magnets, and any associations thereof.

As example of reference electrode, mention may be made of silver chloride electrodes.

According to a first embodiment, the electrochemical cell is put to operate in such a way to induce a constant potential difference between the cathode and the anode (potentiostatic control).

Preferably, according to this first embodiment, the potential difference between the cathode and the anode less than or equal to -1.0 V, preferably ranging from -1.5 V and -2.8 V, more preferably from -2.0 V to -2.5 V.

According to a second embodiment, the electrochemical cell is put to operate in such a way to keeping constant the electric current flowing between the cathode and the anode (galvanostatic control).

Preferably, according to this second embodiment, the electric current density values ranges from -0.5 mA cm⁻² to -10 mA cm$^{-2}$.

According to a preferred embodiment, step b) is performed at a temperature ranging from 30°C to 100°C, preferably from 60°C to 80°C.

The heating of the solution may typically be performed by use of any heating means known by the skilled person. Examples include immersing the container comprising the starting solution in a thermostatically controlled oil or water bath, or circulating an insulated heated water flow through the solution.

*Recovery of the precipitate*

The process of the invention further comprises a step c) of recovery of the precipitate of said at least one rare earth element.

According to a preferred embodiment, the process of the invention further comprises before step c), and notably between step b) and step c), an intermediary step of removing the non-uniform magnetic field.

This preliminary step permits to make mobile the precipitate(s) and thus to facilitate their recovery.

Preferably, step c) comprises a first sub step of evacuating the solution, followed by the effective recovery of the precipitate(s).

The evacuation of the solution permits to isolate the precipitate(s) from the solution and thus facilitates its recovery.

The recovery of the oxide may be performed according to any known method. For example, the oxides may be recovered by scrapping the surface of the cathode.

According to a particular embodiment, the precipitate(s) of said at least one rare earth element are mechanically recovered, for example by use of a blade.

According to a preferred embodiment, the precipitate(s) are recovered by flowing a flush solution inside the device, notably on the surface of the cathode. When a mesh electrode is used, the flush solution is typically flowed through the holes of the mesh electrode. The flowing of the flush solution permits to detach the precipitate(s) and to optionally dissolve them, in particular when using an acidified flush solution.

The precipitate(s) are finally recovered by desiccation of the purge solution, typically at temperature greater than or equal to 60°C.

This embodiment is particularly suitable when the cathode is selected from mesh electrodes.

The flush solution preferably consists of an aqueous solution, optionally acidified.

As examples of acidified aqueous solutions, mention may for example be made citric acid solutions, hydrochloric acid solutions, nitric acid solutions and any mixtures thereof. Preferably, the acidified aqueous solution consists of a nitric acid solution.

Preferably, the acidified aqueous solution has a concentration in acid ranging from 0.1 to 1 mol.L$^{-1}$, typically 0.5 mol.L$^{-1}$.

According to an embodiment, the flush solution may be heated to facilitate the dissolution of the oxides(s), for example at a temperature ranging from 50°C to 90°C.

According to a particular embodiment, the process of the invention further comprises a step of magnetic filtration between step b) and step c).

In particular, according to this particular embodiment, both the solution and the precipitates obtained at the end of step b) are transferred to a second magnetic field device to be captured magnetically. The aim of this optional step is to separate the different precipitates formed during step b either i) to capture the paramagnetic precipitates in place so they may be washed with water, removing any residual source solution, or ii) to separate any different precipitates formed during step b. The solution is then evacuated and the precipitates recovered according to any of the methods detailed above.

*Optional post-treatments*

According to a particular embodiment, the process of the invention further comprises at least one step of purification and/or metal conversion of the precipitate.

A purification step may for example be needed when several elements have been precipitated together during step c). As examples of purification methods, mention may be made of solvent extraction and ion exchange chromatography.

The precipitate may also be converted into the corresponding metal by any known method. Mention may for example be made of annealing treatments under reducing atmosphere, for example using an inlet gas constituted of a mixture of 5% of dihydrogen and 95% of nitrogen.

Regarding the solution depleted from said at least one rare earth element, it could be recycled in the process of the invention in order to recover another rare earth element still present in the solution. In such a case, the process defined above has to be performed again, notably by repeating the sequence of steps a), b) and c).

**Figures**

Figure 1 is a schematic representation of first embodiment of the invention wherein the solution comprises one rare earth element to be extracted and one further magnetic element, and wherein the rare earth element is precipitated, maintaining the further magnetic element in solution.

Figure 2 is a schematic representation of second embodiment of the invention wherein the solution comprises one rare earth element to be extracted and one further magnetic element, and wherein the further magnetic element is precipitated, while the rare earth element is maintained in solution.

Figure 3 is a schematic representation of the device 10 in a configuration adapted to implement step b) of formation of the oxide of the rare earth element of interest.

Figure 4 is schematic representation of the device 10 in a configuration adapted to implement step c) of recovery of the oxide of the rare earth element of interest.

Figure 5 is schematic representation of the arrangements of the diametrical rods used in example 1 to generate a non-uniform magnetic field.

Figure 6 are three photographs of the diametrical magnet array a) dry (before contacting with the starting solution), b) with the starting solution added, and c) after injection of a potassium hydroxide solution.

Figure 7 is a cross-section representation of the magnetic filter assembly used in example 2.

Figure 8 is schematic representation of the filtration chamber of the magnetic filter assembly represented in Figure 6.

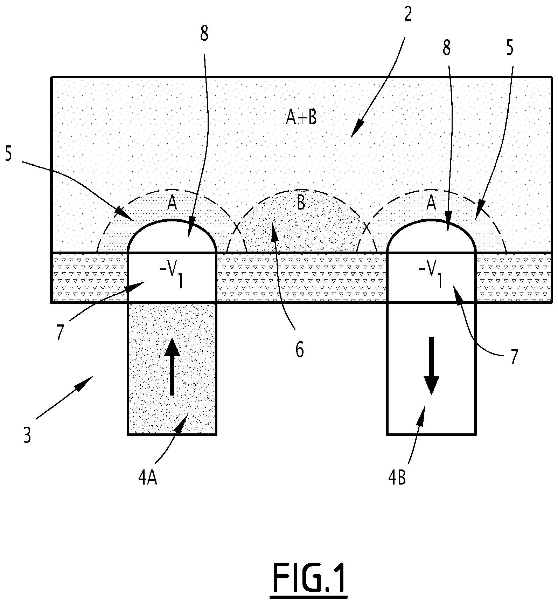

Figure 1 is a schematic representation of first embodiment of the invention wherein the solution comprises one rare earth element to be extracted and one further magnetic element, and wherein the rare earth element is precipitated, maintaining the further magnetic element in solution.

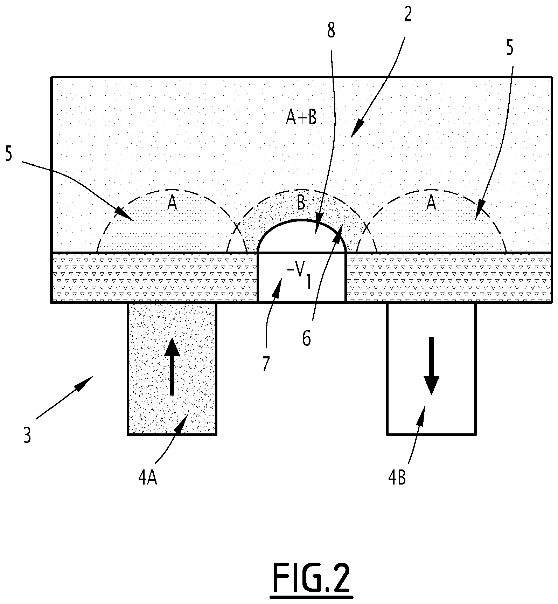

Figure 2 is a schematic representation of second embodiment of the invention wherein the solution comprises one rare earth element to be extracted and one further magnetic element, and wherein the further magnetic element is precipitated, while the rare earth element is maintained in solution.

In figures 1 and 2, we consider that $\chi_A$ is greater than $\chi_B$.

With reference to figures 1 and 2, a starting solution 2 comprising one rare earth element A and one further magnetic B is submitted to a process according to the invention. The device 3 comprises magnets 4A, 4B permitting to create a non-uniform magnetic field. Under the effect of the non-uniform magnetic field, the rare earth element A concentrates in the regions of high field 5, whereas the further magnetic elements B concentrates in the regions of low field 6.

The device further comprises at least one electrochemical unit 7 permitting to locally increase the pH of the solution.

In figure 1, the electrochemical units 7 are located in the regions of high field 5, whereby inducing the formation of a precipitate 8 of the rare earth element in the regions of high field 5.

Reversely, in figure 2, the electrochemical unit 7 is located in the regions of low field 6, whereby inducing the formation of a precipitate 8 of the further magnetic element in the regions of low field 6.

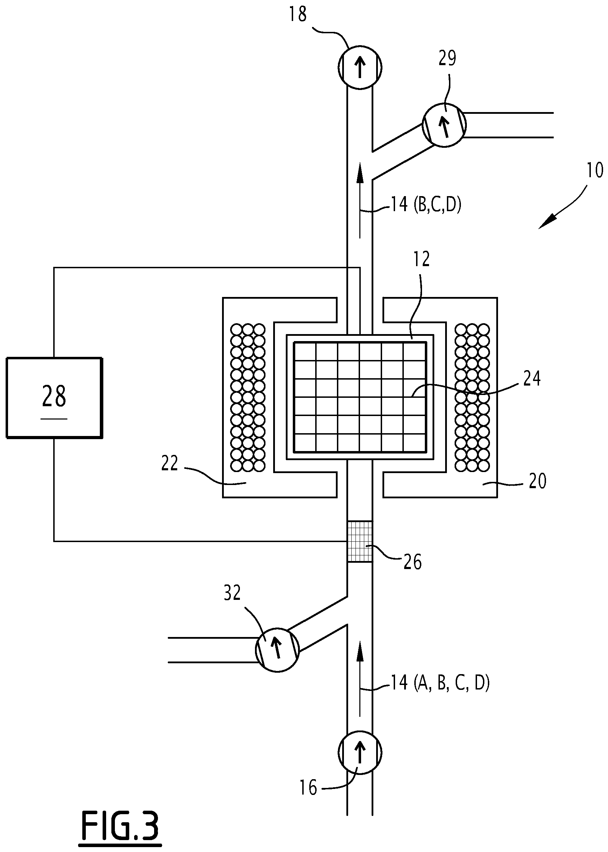

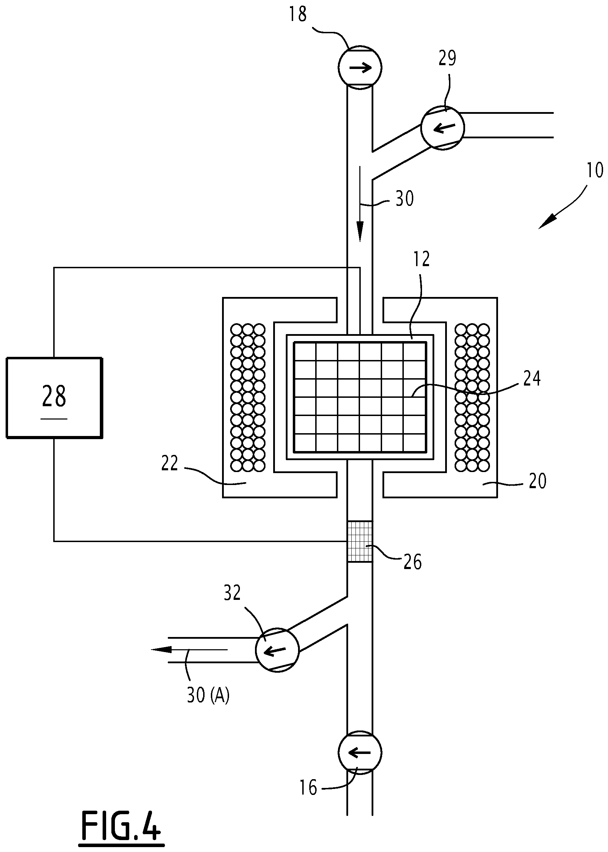

A device 10 that is suitable for the implementation of the process according to the invention is schematically represented in figures 3 and 4.

The device 10 comprises a reservoir 12 adapted to receive a current of an aqueous solution 14 comprising at least one rare earth element A, as a mixture with impurities B, C and D. The solution further comprises at least one chemical specie E likely to be reduced (not represented). The reservoir 12 comprises an inlet 16 to introduce the solution 14 into the reservoir 12 and an outlet 18 to recover the solution 14 at the exit of the reservoir 12.

The device 10 further comprises a pair of magnets 20,22 located on both sides of the reservoir 12, said magnets 20,22 being able to create a non-uniform magnetic field inside the reservoir 12. A mesh electrode 24 is located inside the reservoir 12, in order to be in contact with the solution 14 when injected into the reservoir 12. In particular, the mesh electrode 24 is placed between the two magnets 20,22. Another electrode 26 is located between the reservoir 12 and the inlet 16.

The value of the magnetic field exercising is configured to specifically attract said at least one rare earth element A in the vicinity of the mesh electrode 24.

The mesh electrode 24 and the other electrode 26 are connected to each other by means of an exterior electric current generator 28, said electric current generator 28 being capable of inducing a difference of potential between mesh electrode 24 and the other electrode 26. The device 10 is further connected to heating means (not represented) permitting to control the temperature of the solution 14.

The device 10 also comprises an inlet 29 of injection of a flush solution 30 inside the reservoir 12 and an outlet 32 of recuperation of the flush solution 30 at the exit of the reservoir 12.

The process according to the invention will now be described with reference to the device 10.

With reference to figure 3:

The solution 14 comprising the at least one rare earth element A and the further magnetic elements B, C and D is put into circulation inside the reservoir 12, while the non-uniform magnetic field is applied inside the reservoir 12 by the magnets 20,22. In particular, the solution 14 is injected inside the reservoir 12 as a current flowing from the inlet 16 toward the output 18. Because of the effect of the non-uniform magnetic field, the at least one rare earth element A is retained in the vicinity of the mesh electrode 24, while the rest of the solution 14, notably the further magnetic elements B,C and D are carried away by the flowing of the solution 14 towards the outlet 18.

The electric current generator 28 is then turned on so as to induce a difference of potential between mesh electrode 24 and the other electrode 26. Under the effect of the difference of potential, the chemical specie E oxidizes at the surface of the mesh electrode 24, whereby causing a local increase of the pH of the solution in the vicinity of the mesh electrode 24. As a result, said at least one rare earth elements A precipitates as an oxide on the surface of the mesh electrode 24.

With reference to figure 4:

The electric current generator 28 and optionally the non-uniform magnetic field are then turned off and the reservoir 12 emptied from the solution 14.

The flush solution 30 is then injected inside the reservoir 12 through the inlet 28. In contact with the flush solution 30, the oxide deposited on the surface of the mesh electrode 24 is detached from the mesh electrode 24 and is evacuated with the flush solution 30. The flush solution 30, comprising said at least one rare earth element A, is then recovered at the outlet 30.

**EXAMPLES:**

**Example 1** - Recovery of a dysprosium oxide from a solution further comprising cerium ions (with chemical precipitation, static process)

The starting solution is an aqueous solution comprising $50.10^{-3}$ $mol.L^{-1}$ of cerium nitrate $Ce(NO_3)_3$ and $40.10^{-3}$ $mol.L^{-1}$ of dysprosium nitrate $Dy(NO_3)_3$.

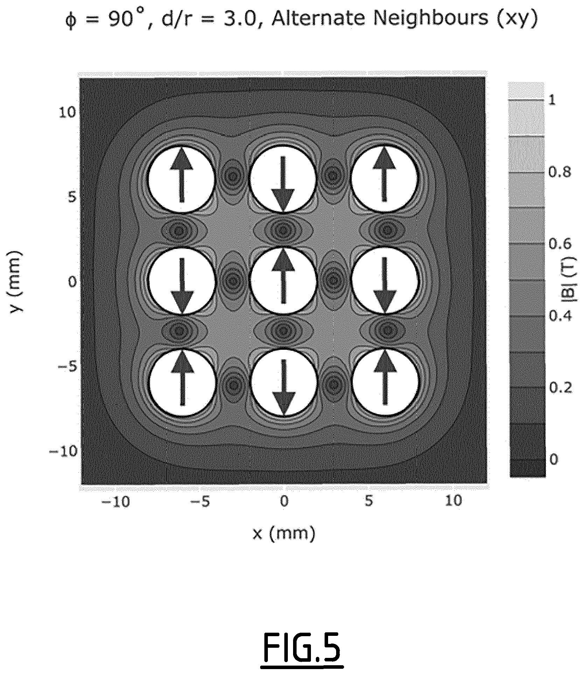

A non-uniform magnetic field is generated using an open array of aligned diametrical rods (4 mm radius, 20 mm long N42 magnetic rods) with an "Alternate neighbours" configuration as shown in Figure 5. Clear zones represent high field regions whereas dark zones represent low field regions.

The open array was immersed in the starting solution. 2 ml of a 0.1 $mol.L^{-1}$ potassium hydroxide KOH solution (pH of 12.86) was then locally injected in the highest magnetic field value regions (clear zones). This induced the precipitation of a Dy-rich oxide, which remains in the high field regions, and is repulsed from zero field regions. After waiting 2 minutes for no further changes, the solution was slowly removed from around the magnets, to be replaced with water. Next, the precipitate was pipetted out from the magnets and allowed to settle in a glass vial, placed on top of a strong permanent magnet. Once settled, the top solution was removed, and fresh deionized water added. The suspension was remixed by agitation of the vial, and then allowed to settle again. This was repeated 10 times, followed by heating the solution to evaporate the water, and thus drying the powder.

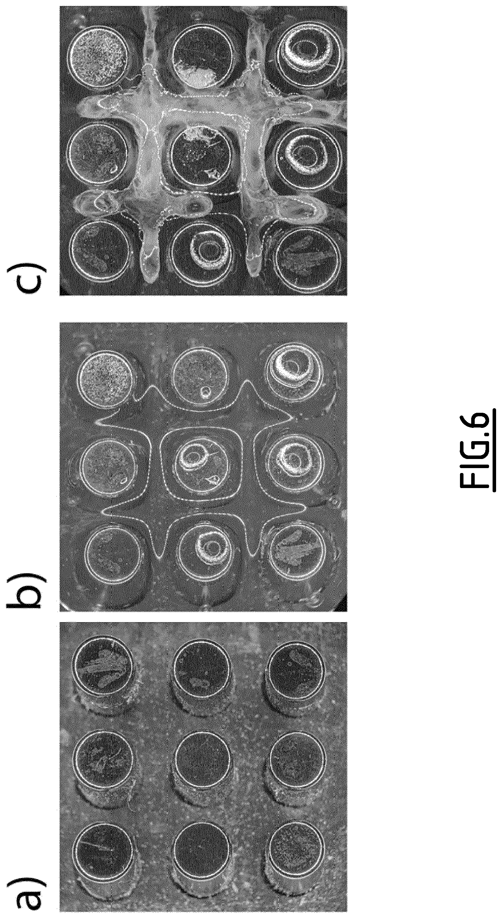

Three photographs of the diametrical magnet array, taken at different stages of the process, are reported on figure 6.

Figure 6a is a photograph of the array in dry state, before contacting with the starting solution.

Figure 6b is a photograph of the array in contact with the starting solution.

Figure 6c is a photograph of the array after injection of the potassium hydroxide solution.

We observe that the injection of the potassium hydroxide solution led to the formation of a white precipitate in the high field regions (between the magnetic rods).

The elemental composition of the precipitate was determined by ICP-OES (inductively coupled plasma - optical emission spectrometry).

The obtained powder comprises 84 atomic % dysprosium Dy, and 16 atomic % cerium Ce.

**Example 2 - Recovery of a dysprosium oxide from a solution further comprising cerium ions (with chemical precipitation, continuous flow process)**

The starting solution is an aqueous solution comprising $50.10^{-3}$ $mol.L^{-1}$ of cerium nitrate $Ce(NO_3)_3$ and $40.10^{-3}$ $mol.L^{-1}$ of dysprosium nitrate $Dy(NO_3)_3$.

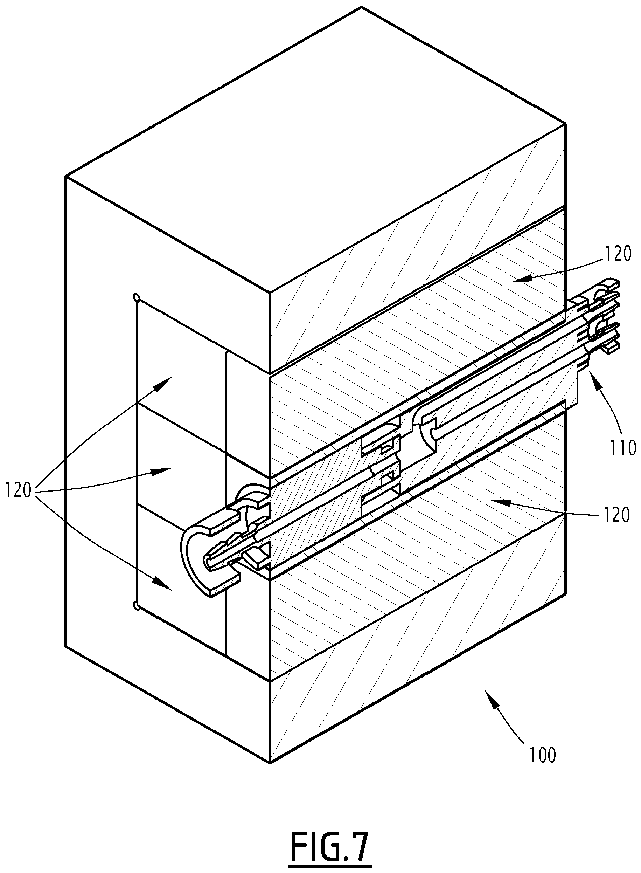

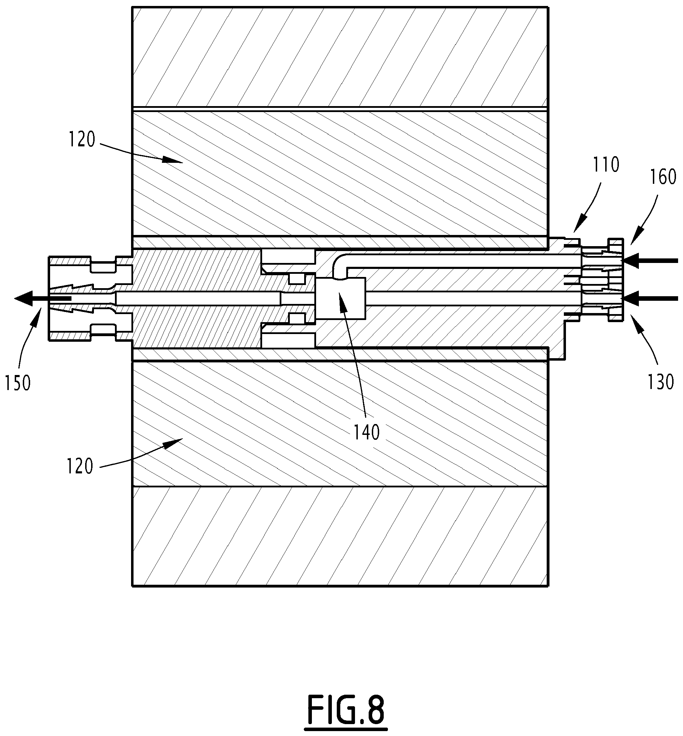

A peristaltic pump is used to recirculate the starting solution from a glass vial through a magnetic filtration device represented in Figures 7 and 8.

Figure 7 is a schematic representation of the magnetic filter assembly 100.

The magnetic filter assembly 100 comprises a filtration chamber 110 surrounded by 8 prismatic magnets 120. The filtration chamber 110 crosses from one side of the magnets 120 to the other.

The configuration of the filtration chamber 110 is described on Figure 8. The filtration chamber 110 comprises an inlet 130 to introduce the starting solution (not represented) into the filtration chamber, a magnetic mesh 140 located at the level of the magnets 120, and outlet 150 to recover the starting the solution. The filtration chamber further comprises an inlet 160 to introduce basic solution in order to precipitate the rare earth elements.

Silicone Masterflex transfer tubing with an inner diameter of 1.6 mm was used to connect all fluidic elements. Excluding the 23 ml maximum volume of the glass vial, the fluidic volume of the rest of the system was 11 ml.

The basic solution is a solution of 0.1 mol.L$^{-1}$ potassium hydroxide KOH solution (pH of 12.86).

The processing steps were as follows:

1. Added 20 ml of working solution to a glass vial reservoir
2. Cycled solution at 32 ml/min through reservoir and system
3. Added 1.0 ml of the KOH solution at 0.25 ml/min
4. Wait 60 s
5. Added 1.0 ml of the KOH solution at 1 ml/min
6. Wait 60 s
7. Drain solution from system
8. Rinse 100 ml deionized water through system
9. Remove filtration chamber from magnet
10. Force 1 ml water through chamber at 2 ml/s into a vial
11. Force 1 ml water through chamber at 2 ml/s into same vial

The process results in a rare earth oxide powder in a 2ml water suspension.

The elemental composition of the obtained powder was determined by ICP-OES (inductively coupled plasma - optical emission spectrometry).

The obtained powder comprises 74 atomic % of dysprosium Dy, and 26 atomic % of cerium Ce.

## Claims

1. A method for separating at least one rare earth element from a solution containing said at least one rare earth element and optionally at least one further magnetic element, the method comprising the following steps:

   a) applying to the solution a non-uniform magnetic field, whereby creating within the solution at least one first zone and at least one second zone having a different magnetic field value, the application of the non-uniform magnetic field value inducing concentrating said at least one rare earth element in the first zone and concentrating said optional at least one further magnetic element in the second zone,
   b) increasing the pH of the solution in the first zone, whereby inducing the precipitation of said at least one rare earth element, or increasing the pH of the solution in the second zone, whereby inducing the precipitation of said optional at least one further magnetic element, and
   c) recovering the precipitate.

2. The method according to claim 1, wherein the solution comprises at least one further magnetic element chosen from the group consisting of: transition metals, rare earth elements different from said at least one rare earth element and mixtures thereof.

3. The method according to claim 2, wherein said at least one rare earth element has a magnetic susceptibility $\chi_{REE}$ and said further magnetic element has a magnetic susceptibility $\chi_{ME}$ such that the absolute relative difference $|(\chi_{REE} - \chi_{ME})/\chi_{ME}|$ is greater than or equal to 1, preferably greater than or equal to 10.

4. The method according to claim 3, wherein $\chi_{REE}$ is greater than $\chi_{ME}$ and wherein the first zone is the zone of the solution with the highest magnetic field value.

5. The method according to claim 3, wherein $\chi_{ME}$ is greater than $\chi_{REE}$ and wherein the first zone is the zone of the solution with the lowest magnetic field value.

6. The method according to any of the preceding claims, wherein, during step b), the pH is locally increased to a value greater than 7, preferably greater than 8.

7. The method according to any of the preceding claims, wherein, during step b), the pH is locally increased by electrochemically reducing at least one chemical substance, for example nitrate ions $NO_3^-$, present in the solution.

8. The method according to claim 7, wherein said at least one chemical substance is electrochemically reduced at the surface of an electrode located in the solution.

9. The method according to claim 8, wherein the electrode is a mesh electrode, preferably a ferromagnetic mesh electrode.

10. The method according to any of claims 1 to 7, wherein, during step b), the pH is increased by a local addition of a chemical base.

11. The method according to any of the preceding claims, further comprising, before step c), an intermediary step of removing the non-uniform magnetic field.

12. The method according to any of the preceding claims, wherein the precipitate is recovered in step c) by flowing a purge solution, said purge solution preferably consisting of an aqueous solution, optionally acidified.

13. The method according to any one of claims 1 to 12, comprising, before step a), a preliminary step of dissolution of a solid comprising said at least one rare earth element and optionally at least one further magnetic element with a solvent, preferably with an acidic solution.

14. The method according to any of the preceding claims, wherein cobalt Co, iron Fe and/or nickel Ni, if present, are removed from the solution before the application of the non-uniform magnetic field.

15. The method according to any one of claims 1 to 14, further comprising a step of purification and/or metal conversion of the precipitate.

A+B

A

B

A

-V$_1$

-V$_1$

4A

4B

## FIG.1

## FIG.2

**FIG.3**

## FIG.4

$\phi = 90°$, d/r = 3.0, Alternate Neighbours (xy)

FIG.5

a)  b)  c)

FIG.6

FIG.7

## FIG.8

Europäisches
Patentamt

European
Patent Office

Office européen
des brevets

# EUROPEAN SEARCH REPORT

Application Number

EP 22 30 5660

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NODDACK WALTER ET AL: "Zur Trennung der Seltenen Erden im inhomogenen Magnetfeld", ZEITSCHRIFT FUR ELEKTROCHEMIE, [Online] vol. 62, no. 1, 31 January 1958 (1958-01-31), pages 77-85, XP055980621, DE ISSN: 0372-8382, DOI: 10.1002/bbpc.19580620112 Retrieved from the Internet: URL:https://onlinelibrary.wiley.com/doi/pdf/10.1002/bbpc.19580620112> [retrieved on 2022-11-11] | 1-6,10, 11,13-15 | INV. C22B59/00 |
| A | * page 78 - page 82; figure 1; tables 1,2 * | 7-9,12 | |
| | ----- | | |
| A | SUZUKI Y ET AL: "Precipitation incidence of the lanthanoid(III) hydroxides", JOURNAL OF THE LESS-COMMON METALS, ELSEVIER-SEQUOIA S.A. LAUSANNE, CH, vol. 126, 1 December 1986 (1986-12-01), pages 351-356, XP024074223, ISSN: 0022-5088, DOI: 10.1016/0022-5088(86)90322-X [retrieved on 1986-12-01] * page 352 - page 353; figures 1,2 * | 1-15 | |
| | ----- | | TECHNICAL FIELDS SEARCHED (IPC) |
| | -/-- | | C22B |

The present search report has been drawn up for all claims

| Place of search | Date of completion of the search | Examiner |
|---|---|---|
| The Hague | 14 November 2022 | Panitz, J |

EPO FORM 1503 03.82 (P04C01)

Europäisches
Patentamt

European
Patent Office

Office européen
des brevets

# EUROPEAN SEARCH REPORT

Application Number

EP 22 30 5660

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Kolczyk K ET AL: "SEPARATION OF RARE EARTH METALS IONS IN A STATIC MAGNETIC FIELD", , vol. 52, no. 4 31 December 2016 (2016-12-31), pages 541-547, XP055980577, Retrieved from the Internet: URL:http://www.mhd.sal.lv/Download/mydownload.php?ed=rn&vol=52&nr=4&an=11&p1=541&p2=541 [retrieved on 2022-11-11] * page 541 - page 545; figures 1-4 * | 1-15 | |
| X | US 11 155 897 B2 (UNIV KENTUCKY RES FOUND [US]) 26 October 2021 (2021-10-26) * column 3, line 33 - column 6, line 2 * | 1-3,6, 10,13,15 | |
| A | KOLCZYK-SIEDLECKA K. ET AL: "Experiments on the magnetic enrichment of rare-earth metal ions in aqueous solutions in a microflow device", JOURNAL OF FLOW CHEMISTRY, [Online] vol. 9, no. 3, 29 May 2019 (2019-05-29), pages 175-185, XP055980569, HU ISSN: 2062-249X, DOI: 10.1007/s41981-019-00039-8 Retrieved from the Internet: URL:http://link.springer.com/article/10.1007/s41981-019-00039-8/fulltext.html> [retrieved on 2022-11-11] * page 176 - page 184 * | 1-15 | TECHNICAL FIELDS SEARCHED (IPC) |

-/--

The present search report has been drawn up for all claims

| Place of search | Date of completion of the search | Examiner |
|---|---|---|
| The Hague | 14 November 2022 | Panitz, J |

EPO FORM 1503 03.82 (P04C01)

Europäisches
Patentamt

European
Patent Office

Office européen
des brevets

# EUROPEAN SEARCH REPORT

Application Number

**EP 22 30 5660**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RODRIGUES ISADORA R. ET AL: "Effect of Magnetic Susceptibility Gradient on the Magnetomigration of Rare-Earth Ions", THE JOURNAL OF PHYSICAL CHEMISTRY C, [Online] vol. 123, no. 37, 20 August 2019 (2019-08-20), pages 23131-23139, XP055980570, US ISSN: 1932-7447, DOI: 10.1021/acs.jpcc.9b06706 Retrieved from the Internet: URL:https://pubs.acs.org/doi/pdf/10.1021/acs.jpcc.9b06706> [retrieved on 2022-11-11] * page 3559 - page 3563; figure 1 * | 1-15 | |

-----

TECHNICAL FIELDS
SEARCHED     (IPC)

The present search report has been drawn up for all claims

| Place of search | Date of completion of the search | Examiner |
|---|---|---|
| The Hague | 14 November 2022 | Panitz, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 5660

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2022

| Patent document cited in search report | | Publication date | Patent family member(s) | | Publication date |
|---|---|---|---|---|---|
| US 11155897 | B2 | 26-10-2021 | US | 2019136344 A1 | 09-05-2019 |
| | | | US | 2022064759 A1 | 03-03-2022 |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021155224 A

- EP 3180290 A

**Non-patent literature cited in the description**

- **P. W. SELWOOD.** Magnetochemistry. Interscience Publishers, 1956
- Utilizing the Evans Method with a Superconducting NMR Spectrometer in the Undergraduate Laboratory. **E. M. SCHUBERT.** J. Chem. Educ. 1992, 69, , 62
- **J. M. D. COEY.** Magnetism and Magnetic Materials. Cambridge University Press, 2010
- Magnetochemistry and Magnetic Separation. **P. DUNNE.** Handbook of Magnetism and Magnetic Materials. Springer International Publishing, 2021, 1-39
- Near Electrode Effects in Magneto-Electrochemistry. **P. DUNNE.** Ph.D. Trinity College, University of Dublin, 2011

- **P. DUNNE et al.** Magnetic Structuring of Electrodeposits. *Phys. Rev. Lett.,* 2011, vol. 107, 024501
- **P. DUNNE et al.** Patterning Metallic Electrodeposits with Magnet Arrays. *Physical Review B,* 2012, vol. 85, 224411
- **O. CUGAT et al.** Permanent Magnet Variable Flux Sources. *IEEE Transactions on Magnetics,* 1994, vol. 30, 4602
- **J. E. HILTON et al.** An Adjustable Linear Halbach Array. *Journal of Magnetism and Magnetic Materials,* 2012, vol. 324, 2051